# EUROPÄISCHE PATENTSCHRIFT

(11) **EP 3 753 082 B1**
(45) Veröffentlichungstag und Bekanntmachung des Hinweises auf die Patenterteilung: **05.07.2023**
(21) Anmeldenummer: 18716956.0
(22) Anmeldetag: 29.03.2018
(51) Int. Cl.: H02J 3/18, H02M 1/36

(54) **ELEKTRISCHE SCHALTUNG ZUR BLINDLEISTUNGSKOMPENSATION**
ELECTRICAL CIRCUIT FOR REACTIVE POWER COMPENSATION
CIRCUIT ÉLECTRIQUE DE COMPENSATION DE PUISSANCE RÉACTIVE

(43) Veröffentlichungstag der Anmeldung: 23.12.2020
(73) Patentinhaber: Siemens Energy Global GmbH & Co. KG, 81739 München (DE)
(72) Erfinder: PINKWART, Jonas, 90768 Fürth (DE); WONG, Kwok Tung, 90617 Puschendorf (DE)
(86) Internationale Anmeldenummer: PCT/EP2018/058178
(87) Internationale Veröffentlichungsnummer: WO 2019/185151

(56) Entgegenhaltungen:
- EP-A1- 0 982 827
- EP-A1- 3 142 239
- US-A- 6 118 676
- US-A1- 2004 046 460

## Beschreibung

Die Erfindung betrifft eine elektrische Schaltung, aufweisend eine Last und mindestens einen Voltage Source Converter zur Blindleistungskompensation, der mit der Last in Reihe geschaltet ist.

Die Erfindung betrifft weiter eine Vorrichtung mit der elektrischen Schaltung.

Die Erfindung betrifft weiter ein Verfahren zur Blindleistungskompensation, das die elektrische Schaltung verwendet.

Blindleistung tritt oft in einphasigen oder mehrphasigen Wechselstromnetzen auf, insbesondere in Dreiphasenwechselstromnetzen, zum Beispiel bei der Verwendung von Lichtbogenöfen an einem dreiphasigen speisenden Netz. Unter Blindleistung versteht man Energie pro Zeit, die nicht zur Wirkleistung eines elektrischen Verbrauchers, der im technischen Sinn eine Last ist, beiträgt und die über die von dem elektrischen Verbraucher pro Zeit tatsächlich umgesetzte Energie bzw. Wirkenergie hinausgeht. Elektrische Großverbraucher müssen nicht nur für die bezogene Wirkenergie, sondern auch für den Blindenergiebezug Kosten tragen. Die Blindleistung wird zudem in das den elektrischen Verbraucher speisende Netz zurückgespeist oder von dort bezogen und sorgt dort häufig für zusätzliche Belastungen von elektrischen Bauteilen des speisenden Netzes und häufig für beträchtliche Spannungsschwankungen.

Sowohl Netzbetreiber als auch elektrische Großverbraucherindustrien sind daher daran interessiert, den Blindleistungsbedarf weitestgehend zu reduzieren. Zu diesem Zweck kann beispielsweise Blindleistungskompensation eingesetzt werden. Dabei kann ein Ausgleich induktiver oder kapazitiver Blindleistung mittels kapazitiver oder induktiver Verbraucher erfolgen. Kompensiert werden kann beispielsweise mit Kondensatoren oder Drosseln bzw. Impedanzen. Zur Blindleistungskompensation werden beispielsweise STATCOM Anlagen in elektrischen Dreiphasenschaltungen eingesetzt. Diese weisen u.a. einen Voltage Source Converter auf, auch leistungselektronische Frequenzumrichter bzw. selbstgeführte Umrichter genannt.

Voltage Source Converters für Blindleistungskompensation in Reihen- oder Parallelschaltung weisen in bekannten Ausführungsformen neben Halbleiterelementen DC-Kondensatoren auf. Die DC-Kondensatoren müssen vor dem Betrieb aufgeladen und deren Spannungen während des Betriebs in einem Toleranzband gehalten werden. Damit ein Voltage Source Converter verlässlich arbeiten kann, ist es wünschenswert, dass sich die Kondensatorspannungen in einem zulässigen Bereich befinden.

Bei parallel zur Last geschalteten Voltage Source Converters existiert schon ein Auf- und Entladungsverfahren. In diesem Fall werden die DC-Kondensatoren durch den Strom aus dem speisenden Netz aufgeladen. Bei Voltage Source Converters, die zur Kompensation in Reihe zu der Last geschaltet sind, kann ohne weitere Vorkehrungen kein Auf- oder Entladungsstrom fließen, wenn die Last ein offener Kreis, also der Stromkreis unterbrochen ist. Da der Voltage Source Converter aber in Reihe mit der Last geschaltet ist, kann dieser Stromfluss nicht immer garantiert werden. Insbesondere direkt nach dem Einschalten des Voltage Source Converter, das zum Vorladen führt, und in Zeiten, in denen die Last keinen Strom führt, ist eine Regelung der Kondensatorspannungen so nicht möglich.

Bekannt ist, die Serienkompensation einer schnell veränderlichen nichtlinearen Last durch einen sogenannten "Smart Predictive Line Controller" (SPLC) zu realisieren. Dieser basiert auf einer thyristorgesteuerten Drossel, die wie eine variable Induktivität wirkt. Damit bleiben die Gesamtimpedanz und entsprechend auch die Blindleistung annähernd konstant. Dies kann zu einer verbesserten Performance bezüglich Netzrückwirkungen führen.

Aus der europäischen Patentanmeldung EP 3 142 239 A1 ist es bekannt, einen modularen Multilevel-Stromrichter mit einer Hilfsladeenergie-Versorgungseinheit auszustatten, um die Kondensatoren der Stromrichterzellen vorzuladen. Zusätzlich wird eine Hilfsansteuerenergie-Versorgungseinheit verwendet, um während des Ladevorgangs Ansteuerenergie zum Ansteuern der Halbleiterschalter der Stromrichterzellen bereitzustellen.

Die europäische Patentanmeldung EP 0 982 827 A1 offenbart eine Serienkompensationseinrichtung, die einen Stromrichter und eine Filterschaltung aufweist, wobei die Filterschaltung aus zwei Drosselspulen und einem Kondensator besteht.

Eine weitere elektrische Schaltung ist aus EP2947766A1 bekannt.

Die Aufgabe besteht darin, eine elektrische Schaltung zur Verfügung zu stellen, die die Einsetzbarkeit der elektrischen Schaltung mit dem Voltage Source Converter verbessert.

Erfindungsgemäß wird eine elektrische Schaltung mit den Merkmalen des Anspruchs 1 und ein Verfahren mit den Merkmalen des Anspruchs 7 offenbart. Erfindungsgemäß wird eine elektrische Schaltung zur Verfügung gestellt, bei der der Voltage Source Converter dafür eingerichtet ist, in einem Nulllastzustand der Last, in dem die Last keinen Strom führt, funktionsfähig zu sein.

Die erfindungsgemäße Schaltung hat den Vorteil, dass sie ermöglicht, die Voltage Source Converters auch in Zeiten zu regeln, in denen die Last keinen Strom führt, bei Beibehaltung der Vorteile einer Schaltung mit dem Voltage Source Converter.

Die Erfinder haben erkannt, dass die Einsetzbarkeit der eingangs genannten elektrischen Schaltung mit Voltage Source Converter besonders einfach dadurch verbessert werden kann, dass der Betrieb des Voltage Source Converters auch im Nulllastzustand der Last regelbar ist. So können insbesondere große, schnell veränderliche nichtlineare Lasten auch an Netzen mit strengen Grenzwerten für Spannungsqualität betrieben werden. Auf herkömmliche Parallelkompensation, wie z. B. SVC, kann wahrscheinlich verzichtet werden. Ein ruhiger Stromfluss in die Last ermöglicht einen optimierten Betrieb und damit höhere Produktion und/oder geringere Belastung der Betriebselemente.

Der Voltage Source Converter weist eine Kondensatoranordnung auf und die elektrische Schaltung ist dafür eingerichtet, die Ladung und/oder Spannung der Kondensatoranordnung im Nulllastzustand der Last zu regeln. Vorzugsweise ist der Voltage Source Converter bei einem mehrphasigen speisenden Netz ein mehrphasiger Voltage Source Converter, besonders vorzugsweise ein dreiphasiger Voltage Source Converter bei einem dreiphasigen speisenden Netz. Alternativ sind grundsätzlich aber auch elektrische Schaltungen vorgesehen, bei denen ein einphasiger Voltage Source Converter vorgesehen ist, insbesondere bei einem einphasigen speisenden Netz. In Ausführungsformen ist ein einphasiger Voltage Source Converter pro vorhandener Phase vorgesehen. Voltage Source Converter mit Kondensatoranordnung sind grundsätzlich bekannt. Jedoch waren sie bisher nicht dafür eingerichtet, die Ladung und/oder Spannung der Kondensatoranordnung im Nulllastzustand der in Reihe geschalteten Last zu regeln. Die Verwendung eines grundsätzlich bekannten Voltage Source Converters kann dennoch besonders einfach sein. Er ist dem Fachmann als elektrisches Bauteil vom Prinzip her bekannt und muss nur noch entsprechend eingerichtet werden, die Kondensatoranordnung im Nulllastzustand zu regeln.

Die Kondensatoranordnung kann einen oder mehrere Kondensatoren aufweisen. Es ist durch die Erfindung möglich, die Kondensatoren eines Voltage Source Converter vorzuladen, wenn die zu kompensierende Serien-Last noch nicht eingeschaltet ist oder aus einem anderen Grund keinen Strom führt.

Die elektrische Schaltung weist eine Impedanz auf, die dafür eingerichtet ist, einen Kreisstrom zum Laden und Entladen der Kondensatoranordnung bereitzustellen. Vorzugsweise ist die Impedanz eine mehrphasige Impedanz, besonders vorzugsweise eine dreiphasige Impedanz. Vorzugsweise entspricht die Anzahl der Phasen der Impedanz einer Anzahl der Phasen des speisenden Netzes. Die Impedanzen sind dann dafür angeordnet, die Kondensatoranordnung im Nulllastzustand der Last zu laden und/oder zu entladen. Ausführungsformen sehen vor, dass die Impedanz zwischen den Phasen oder gegen einen Sternpunkt ausgeführt ist. In einigen Ausführungsformen ist die Impedanz verlustarm ausgeführt.

Die Impedanz ist der Last und dem Voltage Source Converter zwischengeschaltet. In manchen Ausführungsformen weist die Impedanz mehrere einzelne Impedanzelemente auf. Bei einer dreiphasigen Impedanz sind vorzugsweise drei einzelne Impedanzelemente vorgesehen. Vorzugsweise entspricht eine Anzahl der Impedanzelemente der Anzahl der Phasen des speisenden Netzes. In einigen Ausführungsformen ist eine Ausführung der einzelnen Impedanzelemente in Sternschaltung oder Dreiecksschaltung vorgesehen. Vorzugsweise ist jedem Phasenausgang des Voltage Source Converters ein einzelnes Impedanzelement zugeordnet.

Ausführungsformen sehen vor, dass die Impedanz als Filterkreis ausgeführt ist. Dieser übernimmt in einigen Ausführungsformen neben der Aufgabe des Führens von Kreisströmen auch während des Betriebs der Last die Aufgabe einer Blindleistungskompensation und/oder der Filterung von Harmonischen. Der Vorteil dieser Möglichkeit ist, dass keine schaltbaren Elemente benötigt werden, weil die Verluste gering sind.

Ausführungsformen weisen den Filterkreis auf, der in Sternschaltung oder in Dreiecksschaltung ausgeführt ist. Vorzugsweise ist die Impedanz des Filterkreises zwischen den Phasen oder gegen einen Sternpunkt ausgeführt. Vorzugsweise ist die Last eine dreiphasige Last. Vorzugsweise ist die Anlage eine dreiphasige Anlage, also vorzugsweise zur Speisung durch ein dreiphasiges speisendes Netz eingerichtet. In manchen Ausführungsformen kann eine Sternschaltung besonders vorteilhaft sein. Alternativ ist auch eine Dreiecksschaltung möglich. Manche Ausführungen sehen vor, die Leistung und die Abstimmfrequenz des Filterkreises bei der Auslegung der Gesamtanlage zu bestimmen.

In einigen Ausführungsformen ist der Filterkreis gedämpft. Vorzugsweise ist der Filterkreis mit einem oder mehreren Widerständen versehen. Dadurch kann die Vorrichtung gedämpft werden.

Manche Ausführungsformen weisen einen oder mehrere weitere Filterkreise auf, die vorzugsweise an dem speisenden Netz parallel zu der Last geschaltet sind. Das bedeutet vorzugsweise, dass der eine oder die mehreren weiteren Filterkreise parallel zur Einrichtung an dem speisenden Netz, auch Schiene genannt, installiert sind.

Einige Ausführungsformen weisen einen Umrichter auf. Der Umrichter schließt in manchen Ausführungsformen die Last an ein Wechselspannungsnetz an. Ausführungsformen sehen eine Ansteuereinheit für den Umrichter vor. Regelparameter der Last dienen in manchen Ausführungsformen als Eingangsdaten für die Ansteuereinheit. Einige Ausführungsformen sehen vor, dass der Umrichter den Voltage Source Converter aufweist. Manche Ausführungsformen sehen zudem vor, dass der Umrichter eine Vordrossel aufweist, die in einigen Ausführungsformen dem Voltage Source Converter in Richtung des speisenden Netzes in Reihe vorgeschaltet ist.

In Ausführungsformen weist die elektrische Schaltung einen oder mehrere Messwandler auf. Vorzugsweise ist ein Messwandler pro Phase vorgesehen. Der Messwandler ist vorzugsweise dafür eingerichtet, Spannungs- und Strommesswerte zur Regelung der elektrischen Schaltung bereitzustellen. Bevorzugte Messwandler sind Stromwandler und Spannungswandler. Ist der Messwandler der Stromwandler, so ist er vorzugsweise in Reihe zum Voltage Source Converter geschaltet. Ist der Messwandler der Spannungswandler, ist er vorzugsweise entweder zwischen den Phasen oder zwischen einer Phase und einer Erde geschaltet.

Erfindungsgemäß wird zudem eine Vorrichtung zur Verfügung gestellt, die eine erfindungsgemäße elektrische Schaltung aufweist. Der Voltage Source Converter in der Vorrichtung ist dafür eingerichtet, in dem Nulllastzustand der Last, in dem die Last keinen Strom führt, funktionsfähig zu sein.

Die erfindungsgemäße Vorrichtung hat somit den Vorteil, dass sie ermöglicht, über die elektrische Schaltung die Voltage Source Converter auch in Zeiten zu regeln, in denen die Last keinen Strom führt, bei Beibehaltung der Vorteile einer Schaltung mit Voltage Source Converter. Beispielsweise kann ein harmonisierter Stromfluss in die Last der Vorrichtung eine höhere Produktivität ermöglichen.

In manchen Ausführungsformen ist die Vorrichtung eine Vorrichtung, die einen Lichtbogenofen speist. In manchen Ausführungsformen kann eine Ofenspannung des Lichtbogenofens durch die erfindungsgemäße elektrische Schaltung konstanter als ohne Serienkompensation bereitgestellt werden. Dies kann zu einem höheren Leistungseintrag in einen Ofeninhalt, wie beispielsweise Schrott, und/oder weniger Abnutzung an Elektroden des Lichtbogenofens führen und so insgesamt zu einer Produktivitätssteigerung. Beispielsweise können also stromführende Elemente des Lichtbogenofens, wie Elektroden oder Heizelemente und der Lichtbogen selbst, die Last der elektrischen Schaltung sein.

Erfindungsgemäß wird zudem ein Verfahren zur Blindleistungskompensation zur Verfügung gestellt, das eine erfindungsgemäße elektrische Schaltung verwendet. In dem Verfahren funktioniert der Voltage Source Converter in der elektrischen Schaltung in dem Nulllastzustand der Last, in dem die Last keinen Strom führt. Der Voltage Source Converter ist also unabhängig vom Zustand der Last, selbst im Nulllastzustand der Last, funktionsfähig.

Das erfindungsgemäße Verfahren hat somit den Vorteil, dass es ermöglicht, über die elektrische Schaltung die Voltage Source Converters auch in Zeiten zu regeln, in denen die Last keinen Strom führt, bei Beibehaltung der Vorteile einer Schaltung mit Voltage Source Converter.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine elektrische Schaltung gemäß dem Stand der Technik ohne zusätzliche Impedanzen, und
- Figur 2: eine elektrische Schaltung gemäß einer Ausführungsform der Erfindung, bei der ein Voltage Source Converter dafür eingerichtet ist, in einem Nulllastzustand einer Last, in dem die Last keinen Strom führt, funktionsfähig zu sein.

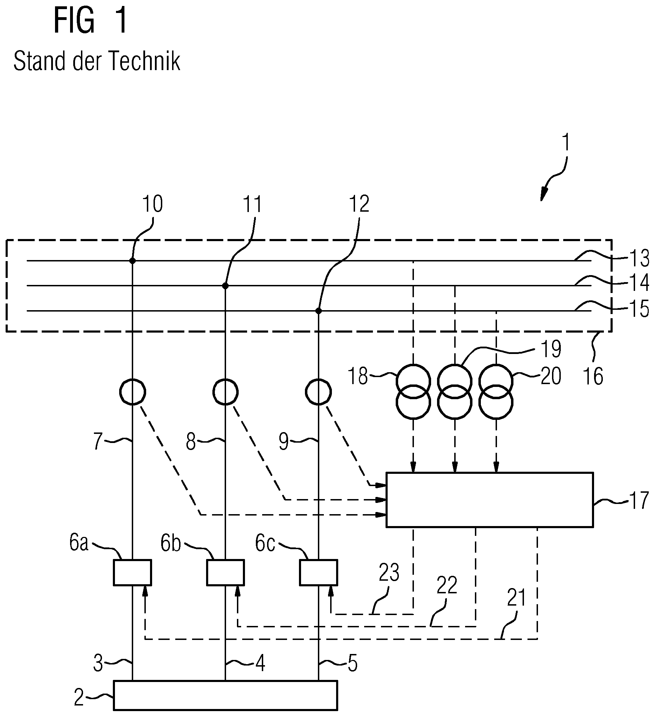

In der Figur 1 ist eine elektrische Schaltung zur Blindleistungskompensation gemäß dem Stand der Technik gezeigt. Die Schaltung ist Teil einer Vorrichtung 1, im vorliegenden Fall zur Speisung einer Last 2, hier eines Lichtbogenofens. Die elektrische Schaltung weist eine in diesem Ausführungsbeispiel dreiphasige Last 2 auf, die über einen ersten Leiter 3, einen zweiten Leiter 4 und einen dritten Leiter 5 mit je einem Umrichter 6a-c elektrisch verbunden ist. Jeder Umrichter 6a-c verbindet den jeweiligen Leiter 3, 4, 5 über eine jeweilige erste, zweite bzw. dritte elektrische Verbindung 7, 8, 9 an einem jeweiligen ersten, zweiten bzw. dritten Übergabepunkt 10, 11, 12 elektrisch mit je einer ersten, zweiten bzw. dritten elektrischen Phase 13, 14, 15 eines speisenden Netzes 16. Die Schaltung und damit die Vorrichtung 1 ist somit wie beschrieben an das speisende Netz 16 elektrisch angeschlossen. Der erste Leiter 3 ist also mit der ersten Phase 13 elektrisch verbunden, der zweite Leiter 4 ist mit der zweiten Phase 14 elektrisch verbunden und der dritte Leiter 5 ist mit der dritten Phase 15 elektrisch verbunden.

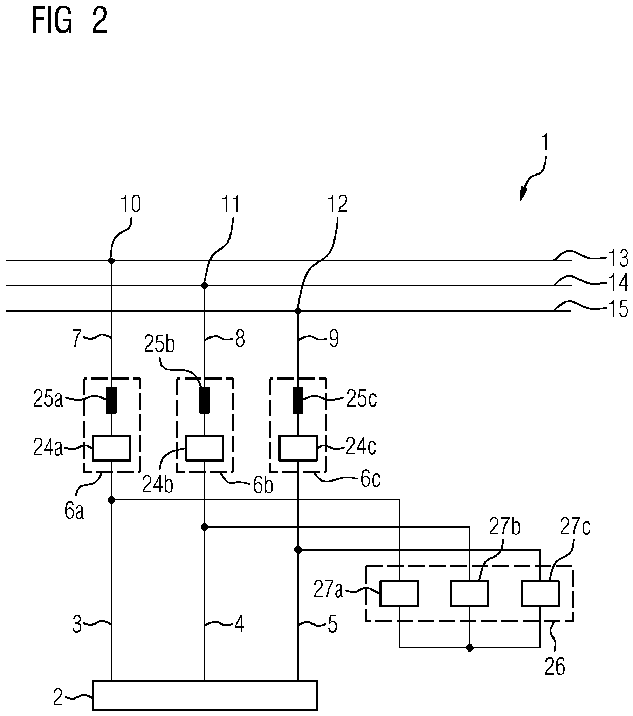

Die elektrische Schaltung weist weiterhin eine Ansteuereinheit 17 auf, zum Beispiel ein SPLC. Die Ansteuereinheit 17 ist über einen ersten, einen zweiten und einen dritten Spannungswandler 18, 19, 20, zur Erfassung von jeweiligen Spannungen, mit der jeweiligen der drei Phasen 13, 14, 15 des speisenden Netzes 16 verbunden. Die Ansteuereinheit 17 ist über drei Anschlussleitungen 21, 22, 23 mit dem jeweiligen Umrichter 6a-c jeder Phase elektrisch verbunden. Die Ansteuereinheit 17 ist dafür ausgelegt, dass Regelparameter der Last 2 als Eingangsdaten für die Ansteuereinheit 17 dienen. Die Ansteuereinheit 17 ist weiter dafür eingerichtet, dass sie zur Blindleistungskompensation Steuersignale über die erste, zweite und dritte Anschlussleitungen 21, 22, 23 an den jeweiligen Umrichter 6a-c jeder Phase sendet. Das speisende Netz 16 ist beispielsweise in Figur 1 und in Figur 2 ein Mittelspannungsnetz mit einer Spannung zwischen 10 und 35 kV zur Speisung der Last 2.

In der Figur 2 ist eine elektrische Schaltung gemäß einer Ausführungsform der Erfindung gezeigt, die in einer Vorrichtung 1, die einen Lichtbogenofen speist, verwirklicht ist. Die elektrische Schaltung weist eine Last 2 auf, in diesem Fall wieder eine dreiphasige Last 2. Weiterhin weist die elektrische Schaltung, in diesem Fall für jede Phase der Last 2, einen Voltage Source Converter 24a-c auf, der mit der Last 2 in Reihe geschaltet ist. In der gezeigten Ausführungsform der Erfindung ist dem Voltage Source Converter 24a-c jeder Phase 13, 14, 15 jeweils eine Vordrossel 25a-c vorgeschaltet. Die Vordrossel 25a-c ist jedoch nur optional. Die jeweilige Vordrossel 25a-c und der jeweilige Voltage Source Converter 24a-c jeder der drei Phasen 13, 14, 15 bilden einen Umrichter 6a-c für die jeweilige Phase 13, 14, 15.

Wie im Folgenden genauer erläutert wird, ist der Voltage Source Converter 24a-c dafür eingerichtet, in einem Nulllastzustand der Last 2, in dem die Last 2 keinen Strom führt, funktionsfähig zu sein.

Jeder der drei Voltage Source Converter 24a-c, einer pro Phase 13, 14, 15, weist eine Kondensatoranordnung, die nicht dargestellt ist, auf. Im Gegensatz zur elektrischen Schaltung aus Figur 1 ist in der elektrischen Schaltung aus Figur 2 vorgesehen, dass die elektrische Schaltung dafür eingerichtet ist, die Ladung und/oder Spannung der Kondensatoranordnung im Nulllastzustand der Last 2 zu regeln.

Zu diesem Zweck weist die elektrische Schaltung eine Impedanz 26 auf, die in diesem Ausführungsbeispiel der Erfindung eine dreiphasige Impedanz 26 ist. Die dreiphasige Impedanz 26 ist dafür eingerichtet, einen Kreisstrom zum Laden und Entladen der Kondensatoranordnung bereitzustellen. Dazu ist sie selbst dann eingerichtet, wenn die Last 2 sich im Nulllastzustand befindet. Deshalb ist es möglich, die Kondensatoren des jeweiligen Voltage Source Converters 24a-c vorzuladen, wenn die zu kompensierende Serienlast noch nicht eingeschaltet ist und die Kondensatorspannung auch in Zeiten zu regeln, in denen die Last 2 keinen Strom führt.

Um dies zu erreichen, ist die dreiphasige Impedanz 26 der Last 2 und dem Voltage Source Converter 24a-c jeweils zwischengeschaltet. Genauer gesagt ist jeder Phase 13, 14, 15 ein einzelnes von insgesamt drei Impedanzelementen 27a-c der dreiphasigen Impedanz 26 zugeordnet. Jeweils ein Impedanzelement 27a-c ist der jeweiligen Phase der Last 2 und dem zugeordneten Umrichter 6a-c zwischengeschaltet. Die dreiphasige Impedanz 26 ist beispielsweise als Filterkreis ausgeführt. Wie in Figur 2 gezeigt ist, ist die dreiphasige Impedanz 26 jeweils mit einer Phase zwischen Voltage Source Converter 24a-c und Last 2 elektrisch verbunden. Im vorliegenden Ausführungsbeispiel sind die drei Impedanzelemente 27a-c der dreiphasigen Impedanz 26 in Sternschaltung ausgeführt. Bei nicht gezeigten Ausführungsformen sind die drei Impedanzelemente 27a-c in Dreiecksschaltung ausgeführt.

Die in Figur 2 gezeigte Ausführungsform der Erfindung weist zudem Messwandler auf, hier Stromwandler und Spannungswandler. Die Stromwandler sind in Reihe zum Voltage Source Converter geschaltet. Die Spannungswandler sind zwischen den Phasen geschaltet. Zur Vereinfachung der Darstellung sind die Messwandler nicht dargestellt.

Der Filterkreis ist im Ausführungsbeispiel gemäß Figur 2 mit Widerständen ausgerüstet, um eine Dämpfung zu erzielen. Die Widerstände sind zur Vereinfachung der Darstellung ebenfalls nicht dargestellt.

In nicht gezeigten Ausführungsformen weist die elektrische Schaltung mindestens einen weiteren Filterkreis auf, der parallel zur Last 2 geschaltet ist. Dieser weitere Filterkreis ist dann an der Netzschiene, also dem speisenden Netz 16, installiert.

Die Erfindung ist anhand von Figur 2 für den Fall eines dreiphasigen speisenden Netzes 16, einer dreiphasigen Impedanz 26 mit drei einzelnen Impedanzelementen 27a-c und einer dreiphasigen Last 2 veranschaulicht. Jedoch sind nicht dargestellte Ausführungsformen der Erfindung beispielsweise einphasig, mit den entsprechenden Modifikationen, sodass die Elemente für die zweite Phase 14 und die dritte Phase 15 jeweils entfallen.

Die in Figur 2 dargestellte elektrische Schaltung sowie die genannten nicht gezeigten Ausführungsformen können für ein erfindungsgemäßes Verfahren zur Blindleistungskompensation verwendet werden.

Die Erfindung betrifft dementsprechend eine elektrische Schaltung, aufweisend eine Last 2 und mindestens einen Voltage Source Converter 24a-c zur Blindleistungskompensation, der mit der Last 2 in Reihe geschaltet ist. Der Voltage Source Converter 24a-c ist dafür eingerichtet, in einem Nulllastzustand der Last 2, in dem die Last 2 keinen Strom führt, funktionsfähig zu sein. Die Erfindung betrifft außerdem eine Vorrichtung 1 und weiterhin ein Verfahren zur Blindleistungskompensation. Die erfindungsgemäße Lösung zur Blindleistungskompensation ist besonders einfach zu realisieren und einsetzbar.

### Bezugszeichenliste

- 1: Vorrichtung
- 2: Last
- 3: erster Leiter
- 4: zweiter Leiter
- 5: dritter Leiter
- 6a-c: Umrichter
- 7: erste elektrische Verbindung
- 8: zweite elektrische Verbindung
- 9: dritte elektrische Verbindung
- 10: erster Übergabepunkt
- 11: zweiter Übergabepunkt
- 12: dritter Übergabepunkt
- 13: erste Phase
- 14: zweite Phase
- 15: dritte Phase
- 16: speisendes Netz
- 17: Ansteuereinheit
- 18: erster Abspanntransformator
- 19: zweiter Abspanntransformator
- 20: dritte Abspanntransformator
- 21: erste Anschlussleitung
- 22: zweite Anschlussleitung
- 23: dritte Anschlussleitung
- 24a-c: Voltage Source Converter
- 25a-c: Vordrossel
- 26: dreiphasige Impedanz
- 27a-c: Impedanzelement

## Patentansprüche

1. Elektrische Schaltung, aufweisend:
- eine Last (2); und
- mindestens einen Voltage Source Converter (24a-c) zur Blindleistungskompensation, der mit der Last (2) in Reihe geschaltet ist,
wobei der Voltage Source Converter (24a-c) dafür eingerichtet ist, in einem Nulllastzustand der Last (2), in dem die Last (2) keinen Strom führt, funktionsfähig zu sein,
wobei der Voltage Source Converter (24a-c) eine Kondensatoranordnung aufweist,
**dadurch gekennzeichnet, dass**
die elektrische Schaltung dafür eingerichtet ist, die Ladung und/oder Spannung der Kondensatoranordnung im Nulllastzustand der Last (2) zu regeln,
wobei die elektrische Schaltung eine Impedanz (26) aufweist, die dafür eingerichtet ist, einen Kreisstrom zum Laden und Entladen der Kondensatoranordnung bereitzustellen, wenn die Last (2) sich im Nulllastzustand befindet, und
wobei die Impedanz (26) der Last (2) und dem Voltage Source Converter (24a-c) zwischengeschaltet ist.

2. Elektrische Schaltung nach Anspruch 1, wobei die Impedanz (26) als Filterkreis ausgeführt ist.

3. Elektrische Schaltung nach Anspruch 1 oder 2, wobei der Filterkreis in Sternschaltung oder in Dreiecksschaltung ausgeführt ist und die Last (2) vorzugsweise eine dreiphasige Last ist.

4. Elektrische Schaltung nach einem der Ansprüche 2 oder 3, wobei der Filterkreis gedämpft ist.

5. Elektrische Schaltung nach einem der Ansprüche 2 bis 4, wobei die elektrische Schaltung einen oder mehrere weitere Filterkreise aufweist, die an einem speisenden Netz parallel zu der Last (2) geschaltet sind.

6. Vorrichtung (1), die eine elektrische Schaltung nach einem der Ansprüche 1 bis 5 aufweist.

7. Verfahren zur Blindleistungskompensation, das eine elektrische Schaltung nach einem der Ansprüche 1 bis 5 verwendet, bei dem
mittels eines Voltage Source Converters (24a-c), der mit einer Last (2) in Reihe geschaltet ist, eine Blindleistungskompensation durchgeführt wird,
wobei der Voltage Source Converter (24a-c) dafür eingerichtet ist, in einem Nulllastzustand der Last (2), in dem die Last (2) keinen Strom führt, funktionsfähig zu sein,
wobei der Voltage Source Converter (24a-c) eine Kondensatoranordnung aufweist und mittels der elektrischen Schaltung die Ladung und/oder Spannung der Kondensatoranordnung im Nulllastzustand der Last (2) geregelt wird,
wobei die elektrische Schaltung eine Impedanz (26) aufweist, mittels der ein Kreisstrom zum Laden und Entladen der Kondensatoranordnung bereitgestellt wird, wenn die Last (2) sich im Nulllastzustand befindet, und
wobei die Impedanz (26) der Last (2) und dem Voltage Source Converter (24a-c) zwischengeschaltet ist.

## Claims

1. Electrical circuit, comprising:
- a load (2); and
- at least one voltage source converter (24a-c) for reactive power compensation, which is connected in series with the load (2),
wherein the voltage source converter (24a-c) is configured to be functional in a zero-load state of the load (2), in which the load (2) does not carry any current, wherein the voltage source converter (24a-c) comprises a capacitor arrangement, **characterized in that**
the electrical circuit is configured to control the charge and/or voltage of the capacitor arrangement in the zero-load state of the load (2),
wherein the electrical circuit comprises an impedance (26) configured to provide a circulating current for charging and discharging the capacitor arrangement should the load (2) be in the zero-load state, and
wherein the impedance (26) is interposed between the load (2) and the voltage source converter (24a-c).

2. Electrical circuit according to Claim 1, wherein the impedance (26) is embodied as a filter circuit.

3. Electrical circuit according to Claim 1 or 2, wherein the filter circuit is embodied in a star connection or in a delta connection and the load (2) is preferably a three-phase load.

4. Electrical circuit according to either of Claims 2 and 3, wherein the filter circuit is damped.

5. Electrical circuit according to any one of Claims 2 to 4, wherein the electrical circuit comprises one or more further filter circuits connected in parallel with the load (2) at a feeding power supply system.

6. Device (1) comprising an electrical circuit according to any one of Claims 1 to 5.

7. Method for reactive power compensation which uses an electrical circuit according to any one of Claims 1 to 5, in which
a reactive power compensation is performed using a voltage source converter (24a-c), which is connected in series with the load (2),
wherein the voltage source converter (24a-c) is configured to be functional in a zero-load state of the load (2), in which the load (2) does not carry any current,
wherein the voltage source converter (24a-c) comprises a capacitor arrangement and the charge and/or voltage of the capacitor arrangement in the zero-load state of the load (2) is controlled by means of the electrical circuit,
wherein the electrical circuit comprises an impedance (26) by means of which a circulating current for charging and discharging the capacitor arrangement is provided should the load (2) be in the zero-load state, and
wherein the impedance (26) is interposed between the load (2) and the voltage source converter (24a-c).

## Revendications

1. Circuit électrique, comportant :
- une charge (2) ; et
- au moins un voltage source converter (24a-c) de compensation de la puissance réactive, qui est monté en série avec la charge (2),
dans lequel le voltage source converter (24a-c) est agencé pour être apte à fonctionner dans l'état de charge nulle de la charge (2), dans lequel la charge (2) ne conduit pas de courant,
dans lequel le voltage source converter (24a-c) a un montage de condensateur,
**caractérisé en ce que**
le circuit électrique est agencé pour régler la charge et/ou la tension du montage de condensateur dans l'état de charge nulle de la charge (2),
dans lequel le circuit électrique a une impédance (26), qui est agencée pour mettre à disposition un courant circulaire pour charger et décharger le montage de condensateur, lorsque la charge (2) se trouve dans l'état de charge nulle, et
dans lequel l'impédance (26) est montée entre la charge (2) et le voltage source converter (24a-c).

2. Circuit électrique suivant la revendication 1, dans lequel l'impédance (26) est réalisée en circuit de filtrage.

3. Circuit électrique suivant la revendication 1 ou 2, dans lequel le circuit de filtrage est réalisé suivant un circuit en étoile ou un circuit en triangle et la charge (2) est, de préférence, une charge triphasée.

4. Circuit électrique suivant l'une des revendications 2 ou 3, dans lequel le circuit de filtrage est amorti.

5. Circuit électrique suivant l'une des revendications 2 à 4, dans lequel le circuit électrique a un ou plusieurs autres circuits de filtrage, qui sont montés sur un réseau d'alimentation en parallèle avec la charge (2).

6. Dispositif (1), qui a un circuit électrique suivant l'une des revendications 1 à 5.

7. Procédé de compensation de la puissance réactive, qui utilise un circuit électrique suivant l'une des revendications 1 à 5, dans lequel
on effectue, au moyen d'un voltage source converter (24a-c), qui est monté en série avec une charge (2), une compensation de puissance réactive,
dans lequel le voltage source converter (24a-c) est agencé pour être apte à fonctionner dans un état de charge nulle de la charge (2), dans lequel la charge (2) ne conduit pas de courant,
dans lequel le voltage source converter (24a-c) a un montage de condensateur et le circuit électrique règle, dans l'état de charge nulle de la charge (2), la charge et/ou la tension du montage de condensateur,
dans lequel le circuit électrique a une impédance (26), au moyen de laquelle on met à disposition un courant circulaire pour la charge et la décharge du montage de condensateur, lorsque la charge (2) se trouve dans l'état de charge nulle, et
dans lequel l'impédance (26) est montée entre la charge (2) et le voltage source converter (24a-c).
